# EUROPÄISCHE PATENTANMELDUNG

(11) **EP 3 296 186 A1**
(43) Veröffentlichungstag der Anmeldung: **21.03.2018**
(21) Anmeldenummer: 16189673.3
(22) Anmeldetag: 20.09.2016
(51) Int. Cl.: B62D 21/00, B62D 21/02, B62D 21/12, B62D 33/077

(54) **NUTZFAHRZEUG MIT EINEM AUFBAU UND VERFAHREN ZUM MONTIEREN EINES AUFBAUS AUF EINEM NUTZFAHRZEUG**

(71) Anmelder: Schmitz Cargobull AG, 48341 Altenberge (DE)
(72) Erfinder: Dorr, Christoph, 46514 Schermbeck (DE); Sundermann, Karin, 48703 Stadtlohn (DE); Westhoff, Ludger, 46354 Südlohn (DE); Dönnebrink, Andreas, 59348 Lüdinghausen (DE)
(74) Vertreter: Cohausz & Florack

(57) **Zusammenfassung**

Die Erfindung betrifft ein Nutzfahrzeug mit einem Chassis (2) und mit einem darauf errichteten Aufbau (7). Dieser wird erfindungsgemäß von einem Hilfsrahmen (11) getragen, der auf dem Chassis (2) über Konsolen (27,28) abgestützt ist, die ihn bezogen auf einen Untergrund (U), auf dem das Nutzfahrzeug (1) steht, in einer Sollhöhe (Hsoll) halten, die höher ist als die auf den ebenen Untergrund (U) bezogene Höhe (Hist) der Oberkante des Chassis (2) in dem Bereich (6), in dem der Aufbau (7) montiert ist. Auf diese Weise lassen sich auf dem Nutzfahrzeug unabhängig vom bei ihm vorhandenen Chassis Aufbauten montieren. Hierzu werden erfindungsgemäß ein Nutzfahrzeug (1) mit einem Chassis (2), ein Hilfsrahmen (11) und eine Auswahl von Gruppen von Konsolen bereitgestellt, wobei sich die Gruppen von Konsolen durch eine unterschiedliche Höhe (HB) der Befestigungsabschnitte (29) oder Länge (LS) der Stützabschnitte (30) der den Gruppen von Konsolen jeweils zugeordneten Konsolen unterscheiden. Dann wird die Höhendifferenz zwischen der Isthöhe (Hist) der Oberkante des Chassis (2) in dessen für die Befestigung der Konsolen (27,28) vorgesehenen Bereichen und einer für die Position des Hilfsrahmens (11) vorgesehenen Sollhöhe (Hsoll) bestimmt und eine Gruppe von Konsolen (27,28) ausgewählt, bei denen die Höhe (HB) ihrer Befestigungsabschnitte der ermittelten Höhendifferenz entspricht. Schließlich wird der Hilfsrahmen über die Konsolen auf dem Chassis befestigt und der Aufbau auf dem Hilfsrahmen montiert.

## Beschreibung

Die Erfindung betrifft ein Nutzfahrzeug mit einem Chassis, an dem mindestens eine Achse mit Rädern des Fahrzeugs gelagert ist, und mit einem Aufbau, der auf dem Chassis errichtet ist.

Darüber hinaus betrifft die Erfindung ein Verfahren zum Montieren eines Aufbaus auf einem Chassis eines Nutzfahrzeugs, wobei an dem Chassis mindestens eine Achse mit Rädern des Fahrzeugs gelagert ist.

Bei Nutzfahrzeugen der hier in Rede stehenden Art handelt es sich insbesondere um Transportfahrzeuge der mittleren und kleinen Gewichtsklasse, also Fahrzeuge mit einem Gesamtgewicht von typischerweise bis zu 7,5 t, insbesondere bis zu 3,5 t, wie sie beispielsweise im regionalen Lieferverkehr eingesetzt werden.

Solche Nutzfahrzeuge werden üblicherweise vom Fahrzeughersteller ohne den zum Verstauen des Transportguts benötigten Aufbau bereitgestellt. Im Auslieferungszustand weisen die Nutzfahrzeuge dann ein Chassis auf, das die zentrale Tragstruktur des Fahrzeugs bildet. An dem Chassis sind das Antriebsaggregat, der Antriebsstrang, die Lenkung, die Fahrerkabine etc. gelagert. Dabei umfasst das Chassis üblicherweise zwei Längsträger, die sich beabstandet zueinander über die Länge des Fahrzeugs erstrecken. Auf diesen Längsträgern oder andere, in der Regel an die Längsträger angebaute Bauteile des Chassis werden dann von spezialisierten Unternehmen die jeweils an den Kundenwunsch angepassten Aufbauten montiert.

Die Aufbauten werden dabei typischerweise als so genannte "Koffer" ausgebildet, d.h. quaderförmigen Gehäusen, deren Boden, Dach und Wände aus vorgefertigten Paneelbauteilen bestehen. Ein Beispiel für einen derartigen Kofferaufbau ist in der EP 2 524 856 B1 beschrieben. Bei den Aufbauten kann es sich jedoch beispielsweise auch um Pritschen- oder Kippaufbauten oder jede andere Art von Aufbauten handeln, wie sie in der Praxis bei kleineren Nutzfahrzeugen benötigt oder angeboten werden.

Unabhängig von ihrer Art und Ausführung ergibt sich bei der Montage der Aufbauten dadurch ein Problem, dass die Höhe, in der der Aufbau über dem Chassis des jeweiligen Nutzfahrzeugs montiert werden kann, von Fahrzeughersteller zu Fahrzeughersteller konstruktionsbedingt unterschiedlich ist. So führen nicht nur unterschiedliche Dimensionierungen der Bauteile des Chassis, sondern auch die Rädergröße sowie die unterschiedliche Gestaltungen von Radkästen und sonstigen Anbauteilen dazu, dass der freie Bereich, in dem der Aufbau montiert werden kann, von Fahrzeugtyp zu Fahrzeugtyp unterschiedlich hoch liegt.

In der Praxis wird dieses Problem dadurch gelöst, dass für jeden Fahrzeugtyp individuell abgestimmte Konsolen, Zwischenträger oder desgleichen vorgesehen werden, die auf dem Chassis montiert werden und die Höhendifferenz zwischen dem Chassis und dem Beginn des für die Montage des Aufbaus zur Verfügung stehenden freien Bereichs überbrücken. Die Anpassung, Fertigung und Bevorratung der hierzu erforderlichen, individuell gefertigten Bauteile ist zeit- und kostenaufwändig. Darüber hinaus bringt die Notwendigkeit der Montage der individuell gefertigten Bauteile insbesondere dann einen vermehrten Montageaufwand mit sich, wenn beispielsweise in einem handwerklich arbeitenden Betrieb in Kleinstauflagen Aufbauten auf unterschiedliche Fahrzeugtypen montiert werden sollen.

Vor diesem Hintergrund hat sich die Aufgabe ergeben, ein Nutzfahrzeug so zu gestalten, dass sich auf ihm unabhängig vom jeweils bei ihm vorhandenen Chassis auf einfache und kostengünstige Weise ein Aufbau der voranstehend erläuterten Art montieren lässt.

Darüber hinaus sollte ein Verfahren zur Montage von Aufbauten auf Nutzfahrzeugen angegeben werden, das es auf kostengünstige und praxisgerechte Art erlaubt, derartige Aufbauten auf beliebigen, jeweils mit einem Chassis ausgestatteten Nutzfahrzeugtypen zu montieren.

In Bezug auf das Nutzfahrzeug hat die Erfindung diese Aufgabe dadurch gelöst, dass ein solches Nutzfahrzeug gemäß Anspruch 1 ausgebildet ist.

Ein die voranstehend genannte Aufgabe erfindungsgemäß lösendes Verfahren ist in Anspruch 12 angegeben.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes Nutzfahrzeug umfasst somit ein Chassis, an dem mindestens eine Achse mit Rädern des Fahrzeugs gelagert ist, und einen Aufbau, der auf dem Chassis errichtet ist umgrenzt.

Erfindungsgemäß ist dabei der Aufbau von einem Hilfsrahmen getragen, der auf dem Chassis über einzelne Konsolen abgestützt ist, die den Hilfsrahmen bezogen auf einen ebenen Untergrund, auf dem das Nutzfahrzeug steht, in einer Sollhöhe halten, die höher ist als die auf den ebenen Untergrund bezogene Höhe der Oberkante des Chassis in dem Bereich, in dem der Aufbau montiert ist.

Dadurch, dass bei einem erfindungsgemäßen Fahrzeug der jeweilige Aufbau auf einem Hilfsrahmen errichtet ist und dieser Hilfsrahmen über Konsolen auf dem Chassis des Fahrzeugs abgestützt ist, ist der für eine ordnungsgemäße Abstützung und Befestigung des Aufbaus auf dem Chassis erforderliche Aufwand deutlich minimiert. Der Hilfsrahmen bietet eine von den tatsächlichen Abmessungen des Fahrzeug-Chassis unabhängige Plattform, deren Breite und Länge optimal an die Abmessungen des Aufbaus angepasst sind. Der Aufbau selbst kann daher unabhängig vom jeweiligen Fahrzeugtyp aus Standardbauteilen zusammengesetzt sein. Seine Anpassung an das jeweilige Fahrzeug erfolgt über den Hilfsrahmen und die ihn stützenden Konsolen.

Die Konsolen können wiederum in Bezug auf den Anschluss an den Hilfsrahmen standardisiert ausgebildet sein, so dass insoweit der Montageaufwand ebenfalls minimiert ist. Lediglich die Höhe und gegebenenfalls Breite der Konsolen muss an den jeweiligen Fahrzeugtyp so angepasst sein, dass der Hilfsrahmen mit seiner zum Aufsetzen des Aufbaus vorgesehenen Oberseite an der Untergrenze des für den Aufbau zur Verfügung stehenden freien Raums oberhalb des Chassis und der anderen diesen Raum möglicherweise beschränkenden Bauteile des Fahrzeugs angeordnet ist.

Dem einem erfindungsgemäßen Nutzfahrzeug zu Grunde liegenden Konzept entsprechend sieht das erfindungsgemäße Verfahren zum Montieren eines Aufbaus auf einem Chassis eines Nutzfahrzeugs, wobei an dem Chassis mindestens eine Achse mit Rädern des Fahrzeugs gelagert ist, umfassend folgende Arbeitsschritte vor:
a) Bereitstellen des mit dem Chassis ausgestatteten Nutzfahrzeugs;
b) Bereitstellen einer Auswahl von Gruppen von Konsolen, die jeweils einen Befestigungsabschnitt und einen rechtwinklig dazu angeordneten Stützabschnitt aufweisen, wobei sich die Gruppen von Konsolen durch eine unterschiedliche Höhe der Befestigungsabschnitte oder Länge der Stützabschnitte der den Gruppen von Konsolen zugeordneten Konsolen unterscheiden;
c) Bereitstellen eines Hilfsrahmens,
d) Bestimmen der Höhendifferenz zwischen der Isthöhe der Oberkante des Chassis in dessen für die Befestigung der Konsolen vorgesehenen Bereichen und einer für die Position des Hilfsrahmens vorgesehenen Sollhöhe, wobei die Isthöhe der für die Befestigung der Konsolen vorgesehenen Bereiche des Chassis und die Sollhöhe der Position des Hilfsrahmens jeweils über einem ebenen Untergrund, auf dem das Nutzfahrzeug steht, gemessen wird,
e) Auswählen mindestens einer Gruppe von Konsolen, bei denen die Höhe ihrer Befestigungsabschnitte der im Arbeitsschritt d) ermittelten Höhendifferenz entspricht;
f1) Aufsetzen der Stützabschnitte (30) der Konsolen (27,28) der ausgewählten Gruppe von Konsolen (27,28) auf den jeweils zugeordneten Bereichen des Chassis (2), Befestigen der Konsolen (27,28) am Chassis (2) und Montieren des Hilfsrahmens (11) an den Befestigungsabschnitten (30) der am Chassis (2) befestigten Konsolen (27,28);
   oder
f2) Montieren der Konsolen (27,28) der ausgewählten Gruppe von Konsolen (27,28) mit ihren Befestigungsabschnitten (30) am Hilfsrahmen (11), Aufsetzen der Stützabschnitte (30) der am Hilfsrahmen (11) befestigten Konsolen (27,28) auf den jeweils zugeordneten Bereichen des Chassis (2) und Befestigen der Konsolen (27,28) am Chassis (2);
g) Montieren des Aufbaus auf dem Hilfsrahmen.

Beim erfindungsgemäßen Verfahren werden also Gruppen von identisch geformten Konsolen zusammengestellt, wobei sich die Gruppen dadurch unterscheiden, dass die Höhe des Befestigungsabschnitts der Konsolen der einen Gruppe sich von der Höhe des Befestigungsabschnitts der Konsole der anderen Gruppe und / oder die Länge des Stützabschnitts der Konsolen der einen Gruppe sich von der Länge des Stützabschnitts der Konsole der anderen Gruppe unterscheidet. Dabei werden optimaler Weise so viele Gruppen von Konsolen bereitgestellt, dass alle Fahrzeugtypen, auf denen im jeweiligen Betrieb jeweils gleichartige Aufbauten montiert werden, abgedeckt sind. Vor der Montage eines Aufbaus auf einem bestimmten Fahrzeugtyp muss dann nur noch die Gruppe von Konsolen bestimmt werden, deren Abmessungen so an die Abmessungen des betreffenden Fahrzeugtyps angepasst sind, dass der für den Aufbau vorgesehene Hilfsrahmen in der für ihn vorgesehenen Höhe auf dem Chassis montiert werden kann.

Im Fall, dass auch die Breite des am jeweiligen Fahrzeugtyp vorhandenen Chassis von Fahrzeugtyp zu Fahrzeugtyp variiert, kann dementsprechend bei erfindungsgemäßer Vorgehensweise im Arbeitsschritt d) zusätzlich die Breitendifferenz zwischen einer parallel zum ebenen Untergrund gemessenen Istbreite des Chassis an den für die Befestigung der Konsolen vorgesehenen Bereichen und einer Sollbreite des Hilfsrahmens bestimmt werden. Im Arbeitsschritt e) wird dann die mindestens eine Gruppe von für die Montage ausgewählten Konsolen so bestimmt, dass nicht nur die Höhe der Befestigungsabschnitte der im Arbeitsschritt d) ermittelten Höhendifferenz, sondern auch die Länge der Stützabschnitte der der jeweiligen Gruppe zugeordneten Konsolen der zusätzlich ermittelten Breitendifferenz entspricht.

Die Montage des Hilfsrahmens auf dem Chassis kann auf zwei alternativen Wegen erfolgen. Bei der ersten Alternative (Arbeitsschritt f1)) werden zunächst die Konsolen der ausgewählten Gruppe von Konsolen mit ihren Stützabschnitten auf den jeweils zugeordneten Bereichen des Chassis gesetzt und diese Konsolen am Chassis befestigt. Dann wird der Hilfsrahmen an den Befestigungsabschnitten der auf dem Chassis befestigten Konsolen montiert. Bei der zweiten Alternative (Arbeitsschritt f2)) werden die Konsolen der ausgewählten Gruppe von Konsolen zuerst mit ihren Befestigungsabschnitten am Hilfsrahmen befestigt, dann die am Hilfsrahmen befestigten Konsolen mit ihren Stützabschnitten auf den jeweils zugeordneten Bereichen des Chassis gesetzt und schließlich die auf dem Chassis sitzenden Konsolen am Chassis befestigt.

Eine besonders einfache Montage ergibt sich bei einem erfindungsgemäßen Nutzfahrzeug dann, wenn dieses Nutzfahrzeug in der heute üblichen Weise ein Chassis mit zwei Langträgern umfasst, auf denen die den Hilfsrahmen stützenden Konsolen stehen.

Eine die Adaption der erfindungsgemäßen Ausgestaltung eines Nutzfahrzeugs an beliebige Nutzfahrzeugtypen erleichternde weitere Variante der Erfindung ist dadurch gekennzeichnet, dass der Hilfsrahmen zwei in Längsrichtung des Nutzfahrzeugs ausgerichtete Hilfslangträger umfasst, die aus mindestens zwei Hilfslangträgerteilstücken zusammengesetzt sind. Die Länge der Hilfslangträgerteilstücke ist dabei so bemessen, dass die Länge der zum jeweiligen Hilfslangträger zusammengesetzten Hilfslangträgerteilstücke in Summe der Solllänge des Hilfslangträgers entspricht.

Diese in Längsrichtung des Hilfslangträgers mindestens zweiteilige Gestaltung der Hilfslangträger erlaubt es bei erfindungsgemäßer Vorgehensweise, den Hilfsrahmen als einen Bausatz bereitzustellen, der mindestens zwei Gruppen von Hilfslangträgerteilstücken umfasst, wobei sich die Gruppen von Hilfslangträgerteilstücken durch die Länge der ihnen zugeordneten Hilfslangträgerteilstücke unterscheiden, die Hilfslangträgerteilstücke der Gruppen im Übrigen jedoch identisch geformt sind. Aus den Gruppen von Hilfslangträgerteilstücken werden unter Berücksichtigung einer Solllänge des Hilfsrahmens jeweils Hilfslangträgerteilstücke unterschiedlicher Länge derart ausgewählt, dass die Gesamtlänge von mindestens zwei aus den ausgewählten Hilfslangträgerteilstücken zusammengesetzten Hilfslangträgern jeweils der Solllänge des Hilfsrahmens entspricht. Unter Verwendung der aus den Hilfslangträgerteilstücken gebildeten Hilfslangträgern wird schließlich der Hilfsrahmen montiert, wobei hierzu beispielsweise Querverbinder oder andere Aussteifungsbauteile verwendet werden können, um die Hilfslangträger gegeneinander abzustützen und so eine optimale Aussteifung des Hilfsrahmens zu gewährleisten.

Auf eine gegenseitige Abstützung der Hilfslangträger durch Querverbinder, wie Hilfsquerträger oder desgleichen, kann verzichtet werden, wenn die Tragfähigkeit und Formsteifigkeit der den Hilfsrahmen tragenden Konsolen und der Hilfslangträger alleine ausreicht, um einen ordnungsgemäßen Stand der Hilfslangträger zu gewährleisten. In diesem Fall besteht der Hilfsrahmen somit nur aus den optional in der voranstehend erläuterten Weise zusammengesetzten Hilfslangträgern und stellt streng genommen somit keinen "Rahmen" dar. Vom Begriff "Hilfsrahmen" sind nach dem Verständnis der Erfindung demnach unabhängig von der Gestalt der jeweiligen Konstruktion sämtliche Baugruppen oder Bauteile umfasst, die einerseits über erfindungsgemäß ausgewählte Konsolen auf dem Chassis des jeweiligen Fahrzeugs abgestützt sind und andererseits den obersten Teil der Hilfskonstruktion definieren, auf der der Aufbauf des Nutzfahrzeugs erfindungsgemäß errichtet ist.

Die gesamte erfindungsgemäße Montage soll bevorzugt ohne Einsatz von Schweißverfahren oder anderen Verfahren erfolgen, bei denen es zu Materialveränderungen in Folge von Wärmeeinwirkung und desgleichen kommen kann. Deshalb sieht die Erfindung gemäß einer für die Praxis besonders effektiven Ausgestaltung vor, dass die Konsolen mit dem Chassis, die Konsolen mit dem Hilfsrahmen, der Hilfsrahmen mit dem Aufbau und die Bauteile des Hilfsrahmens jeweils ausschließlich form- oder kraftschlüssig miteinander verbunden werden. Hierzu können beispielsweise einfache Schraub- oder Nietverbindungen oder sogenannte "Rändebolzverbindungen" eingesetzt werden, wie sie in der DE 10248102 C1 beschrieben sind.

Im Fall, dass der Hilfsrahmen Hilfslangträger umfasst und diese Hilfslangträger mehrteilig ausgebildet sind, können die form- oder kraftschlüssigen Verbindungen der einzelnen Hilfslangträgerteilstücke miteinander mit Hilfe von Verbindungslaschen hergestellt werden, die die Fügestellen zwischen den Hilfslangträgerteilstücken überbrücken.

Die lagerichtige und verbindungssteife Verkopplung der Hilfslangträgerteilstücke eines jeweiligen Hilfslangträgers kann zudem dadurch unterstützt werden, dass die Hilfslangträgerteilstücke an ihren Enden jeweils eine in Höhen- und Längsrichtung des Hilfslangträgerstücks angeschrägte Schrägkante ("Anschrägung") aufweisen. An diesen Anschrägungen werden die Hilfslangträgerteilstücke aneinander gesetzt. Dabei erweist es sich im Hinblick auf die Steifigkeit der Verbindung zwischen den Hilfslangträgerteilstücken als besonders vorteilhaft, wenn in die Anschrägungen ein Absatz eingeformt ist, gegen den im Einsatz das jeweils anliegende Hilfslangträgerstück bei einer quer zur Längserstreckung des Hilfslangträgers wirkenden Belastung abgestützt ist.

Die Konsolen können, wie erwähnt, schuhförmig mit einem Befestigungsabschnitt und einem rechtwinklig zum Befestigungsabschnitt angeordneten Stützabschnitt ausgebildet sein, wobei der Hilfsrahmen an einer dem Stützabschnitt zugewandten Anlagefläche des Befestigungsabschnitts anliegt und wobei der Stützabschnitt mit einer vom Befestigungsabschnitt abgewandten Stützfläche auf dem zugeordneten Bauteil des Chassis abgestützt ist.

Eine lagegenaue, Fertigungs- und Montagetoleranzen ausgleichende Befestigung des Hilfsrahmens an den Konsolen lässt sich auf einfache Weise dadurch erzielen, dass die Hilfslangträger mit Abstand zum Stützabschnitt am Befestigungsabschnitt der zugeordneten Konsolen befestigt sind.

Die Vielseitigkeit des der Erfindung zu Grunde liegenden Nutzfahrzeugkonzepts kann dadurch noch gesteigert werden, wenn die Konsolen an ihrem Befestigungsabschnitt und ihrem Stützabschnitt jeweils zwei oder mehr in Längsrichtung des jeweiligen Abschnitts angeordnete Öffnungen zum Durchführen eines Befestigungsmittels aufweisen, die Hilfslangträger und das zugeordnete Bauteil des Chassis ebenfalls zwei oder mehr Öffnungen zum Durchführen des Befestigungsmittels aufweisen, bei jeder Konsole mindestens eine Öffnung des Befestigungsabschnitts mit einer Öffnung des zugeordneten Hilfslangträgers und eine Öffnung des Stützabschnitts mit einer Öffnung des zugeordneten Bauteils des Chassis zur Deckung gebracht sind und jeweils ein Befestigungsmittel durch die zur Deckung gebrachten Öffnungen geführt ist. Auf diese Weise lassen sich gleichartige, identisch geformte Konsolen nutzen, um den jeweiligen Hilfsrahmen auf unterschiedlich hohen Chassis bzw. in unterschiedlichen Sollhöhen montieren. Die Variation der effektiven Höhe des zum Befestigen des Hilfsrahmens an dem Befestigungsabschnitt vorgesehenen Befestigungspunkts erfolgt dabei durch Auswahl der jeweils bezogen auf die Höhe des Befestigungsabschnitts zur vorgesehenen Sollhöhe passenden Öffnung. Genauso kann auch die für die Befestigung effektiv genutzte Länge des Stützabschnitts durch eine an die jeweilige Chassis- und Aufbaubreite angepasste Auswahl der jeweils passenden Öffnung im Stützabschnitt der Konsole und / oder am Chassisbauteil bestimmt werden, an dem die betreffende Konsole befestigt wird.

Besonders kostengünstig lässt sich die Erfindung dann verwirklichen, wenn die Konsolen und die Hilfslangträger Blechformteile sind. So können beispielsweise die Bauteile des Hilfsrahmens, insbesondere dessen Hilfslangträger, als Blechprofile ausgebildet sein, die sich auf einfache Weise, beispielsweise durch Rollieren oder andere kontinuierlich ablaufende Umformverfahren, in großen Stückzahlen kostengünstig herstellen lassen.

Kurz gesagt betrifft die Erfindung somit ein Nutzfahrzeug mit einem Chassis und mit einem darauf errichteten Aufbau. Dieser Aufbau ist erfindungsgemäß von einem Hilfsrahmen getragen, der auf dem Chassis über Konsolen abgestützt ist, die ihn bezogen auf einen Untergrund, auf dem das Nutzfahrzeug steht, in einer Sollhöhe halten, die höher ist als die auf den ebenen Untergrund bezogene Höhe der Oberkante des Chassis in dem Bereich, in dem der Aufbau montiert ist. Auf diese Weise lassen sich auf dem Nutzfahrzeug unabhängig vom bei ihm vorhandenen Chassis Aufbauten montieren. Hierzu werden erfindungsgemäß ein Nutzfahrzeug mit einem Chassis, ein Hilfsrahmen und eine Auswahl von Gruppen von Konsolen bereitgestellt, wobei sich die Gruppen von Konsolen durch eine unterschiedliche Höhe der Befestigungsabschnitte oder Länge der Stützabschnitte der den Gruppen von Konsolen jeweils zugeordneten Konsolen unterscheiden. Dann wird die Höhendifferenz zwischen der Isthöhe der Oberkante des Chassis in dessen für die Befestigung der Konsolen vorgesehenen Bereichen und einer für die Position des Hilfsrahmens vorgesehenen Sollhöhe bestimmt und eine Gruppe von Konsolen ausgewählt, bei denen die Höhe ihrer Befestigungsabschnitte der ermittelten Höhendifferenz entspricht. Schließlich wird der Hilfsrahmen über die Konsolen auf dem Chassis befestigt und der Aufbau auf dem Hilfsrahmen montiert.

Nachfolgend wird die Erfindung anhand einer ein Ausführungsbeispiel darstellenden Zeichnung näher erläutert. Deren Figuren zeigen jeweils schematisch:
- Fig. 1: ein Nutzfahrzeug mit bereits montiertem Hilfsrahmen, jedoch ohne Aufbau in einer perspektivischen Ansicht von hinten;
- Fig. 2: einen Hilfsrahmen zur Montage eines Aufbaus auf dem Fahrzeug gemäß Fig. 1;

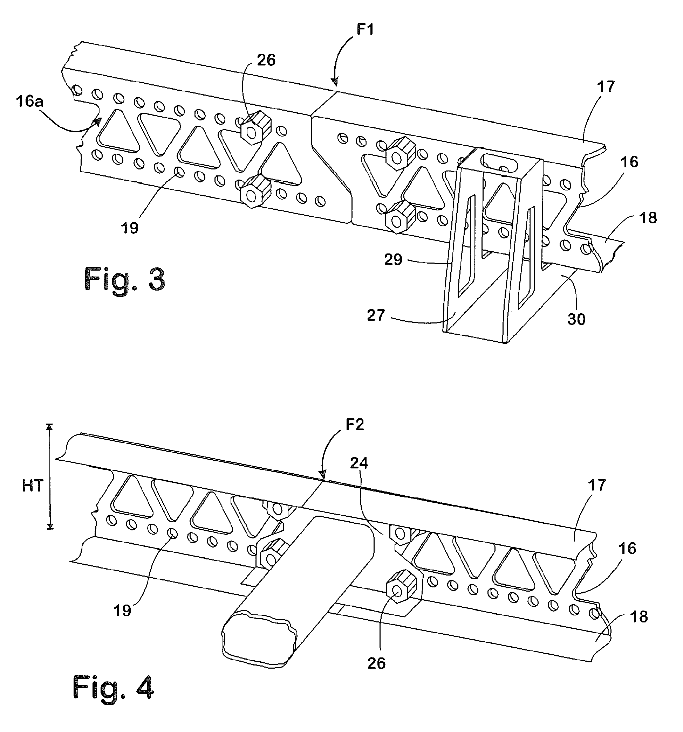

- Fig. 3: einen vergrößerten Ausschnitt A von Fig. 2;
- Fig. 4: einen vergrößerten Ausschnitt B von Fig. 2;
- Fig. 5: eine erste Konsole in einer perspektivischen Ansicht;
- Fig. 6: eine zweite Konsole in einer perspektivischen Ansicht;
- Fig. 7: das Nutzfahrzeug gemäß Fig. 1 mit fertig montiertem Aufbau.

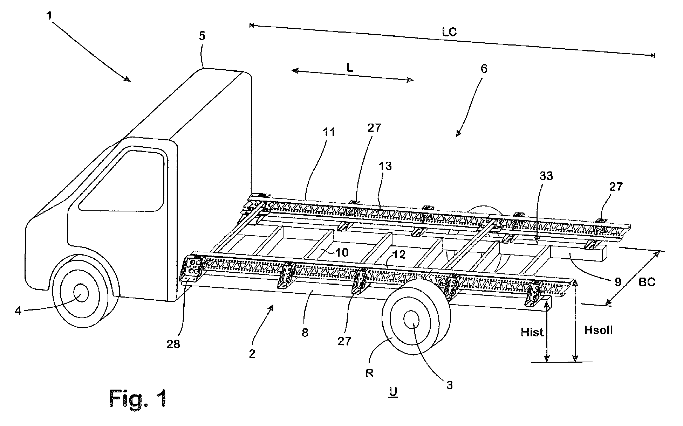

Bei dem in Fig. 1 dargestellten Nutzfahrzeug 1 handelt es sich um einen Transporter der 3,5-Tonnen-Klasse, der typischerweise ein als Leiterrahmenkonstruktion aufgebautes Chassis 2 mit der daran gelagerten Antriebsachse 3 und gelenkten Achse 4, ein von dem Chassis getragenes, im Frontbereich des Nutzfahrzeugs 1 angeordnetes Antriebsaggregat und eine darüber, im Frontbereich des Fahrzeugs 1 angeordnete Führerkabine 5 trägt.

Im sich an die Führerkabine 5 anschließenden rückwärtigen Bereich des Nutzfahrzeugs 1 ist im Auslieferungszustand, in dem das Nutzfahrzeug 1 das Werk des Nutzfahrzeugherstellers verlässt, über diesem Teil des Chassis 2 ein Freiraum 6 für die Montage eines kofferartigen Aufbaus 7 vorgesehen, der einen Laderaum für mit dem Nutzfahrzeug 1 zu transportierendes Gut umgrenzt.

Im Auslieferungszustand weist das Nutzfahrzeug 1 keine Besonderheiten auf, sondern entspricht dem Standard des jeweiligen Herstellers.

Das Chassis 2 weist zwei sich in Längsrichtung L des Nutzfahrzeugs 1 erstreckende, als Stahlprofile geformte Langträger 8,9 auf, die parallel zueinander ausgerichtet und durch Querträger 10 miteinander verbunden sind. Auch der übrige Aufbau des Chassis 2 entspricht der üblichen Standardbauweise des jeweiligen Herstellers.

Für die Montage des Kofferaufbaus 7 ist auf den Langträgern 8,9 ein Hilfsrahmen 11 montiert.

Der Hilfsrahmen 11 ist durch zwei Hilfslangträger 12,13 und zwei die Hilfslangträger 12,13 parallel zueinander ausgerichtet und auf Abstand haltende Hilfsquerträger 14,15 gebildet. Auf die Hilfsquerträger 14,15 kann gegebenenfalls auch verzichtet werden, wenn die Tragfähigkeit und Steifigkeit der Hilfslangträger 12,13 alleine für die Abstützung des Aufbaus A ausreicht. In diesem Fall besteht der Hilfsrahmen 11 nur aus den Hilfslangträgern 11,12, die bei der Montage als separate Bauteile gehandhabt werden.

Die quer zur Längserstreckung L und parallel zum Grund, auf dem das Nutzfahrzeug 1 steht, gemessene Breite BH des Hilfsrahmens 11 ist breiter als die zwischen den Außenkanten der Hilfslangträger 12,13 gemessene Breite BC, jedoch kleiner als die der gesetzlich maximal zulässigen Breite entsprechenden Breite BA des Aufbaus 7. Beim hier gezeigten Beispiel ist die Breite BH des Hilfsrahmens 11 zusätzlich so bemessen, dass der Hilfsrahmen 11 zwischen die Antriebsräder R des Nutzfahrzeugs 1 passt.

Die Hilfslangträger 12,13 sind jeweils aus zwei Hilfslangträgerteilstücken 12a,12b und 13a,13b zusammengesetzt. Diese Hilfslangträgerteilstücke 12a,12b sind dabei jeweils aus unterschiedlichen Gruppen von Hilfslangträgerteilstücken ausgewählt worden, die im Betrieb, der die Montage des Aufbaus 7 auf dem Nutzfahrzeug 1 vornimmt, oder beim Hersteller des Aufbaus 7 bevorratet werden. Jedes Hilfslangträgerteilstück einer bestimmten Länge ist dabei jeweils zu einer Gruppe zusammengefasst. So werden beispielsweise sechs Gruppen von unterschiedlich langen, im Übrigen aber identisch geformten Hilfslangträgerteilstücken bereitgehalten. Die Längen der Hilfslangträgerteilstücke der einzelnen Gruppen sind dabei so aufeinander abgestimmt, dass durch Kombination von jeweils zwei oder mehr Hilfslangträgerteilstücken, die einer der Gruppen oder mehreren unterschiedlichen Gruppen entnommenen und miteinander zu jeweils einem Hilfslangträger 12,13 miteinander kombiniert werden, die Gesamtlänge LH der dem jeweiligen Hilfsrahmen 11 zugeordneten Hilfslangträger 12,13 an die auf dem jeweiligen Nutzfahrzeug 1 für die Montage des Aufbaus 7 zur Verfügung stehende Länge LC und die Länge LA des Aufbaus 7 angepasst werden können. Auf diese Weise sind für den Hilfslangträger 12,13 beispielsweise aus der zweiten Gruppe die Hilfslangträgerteilstücke 12a,13a mit einer Länge LH' und aus der vierten Gruppe von Hilfslangträgerteilstücken mit einer Länge LH", welche kürzer ist als die Länge LH', die Hilfslangträgerteilstücke 12b,13b entnommen worden, so dass ein Langträger 12,13 mit der geforderten Gesamtlänge LH = LH' + LH" erhalten wird.

Die Hilfslangträgerteilstücke 12a,12b,13a,13b sind jeweils als U-Profile aus einem Blech geformt. Zur Gewichtsminimierung sind dabei in einen zentralen Bereich ihres Basisabschnitts 16 in regelmäßigen Abständen Öffnungen eingeformt. Zusätzlich weisen über die gesamte zur Verfügung stehende Länge an den jeweiligen oberen Schenkelabschnitt 17 bzw. unteren Schenkelabschnitt 18 angrenzenden Randbereiche des Basisabschnitts 16 der Hilfslangträgerteilstücke 12a - 13b jeweils eine Reihe in gleichmäßigen Abständen angeordnete kreisrunde Durchgangsöffnungen 19 auf.

Um eine einwandfreie Ausrichtung der Hilfslangträgerteilstücke 12a,12b und 13a,13b aneinander zu erleichtern und um den Kraftfluss im Bereich der Fügezonen F1,F2, in der die einander zugeordneten Hilfslangträgerteilstücke 12a,12b und 13a,13b aufeinanderstoßen, zu optimieren, sind die Hilfslangträgerteilstücke 12a-13b im Bereich ihres Basisabschnitts 16 an ihren Enden über ihre Höhe HT zu Anschrägungen 20,21 angeschrägt. Dabei sind die Anschrägungen 20,21 spiegelsymmetrisch zur auf die Längserstreckung L bezogenen Mitte des jeweiligen Hilfslangträgerteilstücks 12a-13b ausgerichtet, so dass jeweils ein Schenkelabschnitt 17 der Hilfslangträgerteilstücke 12a-13b kürzer als ihr anderer Schenkelabschnitt 18 ist. Im Bereich des Übergangs vom Basisabschnitt 16 zu den Schenkelabschnitten 17,18 geht die Anschrägung 20,21 jeweils in einen Absatz 22,23 über, dessen stirnseitige Anlagefläche rechtwinklig zum jeweiligen Schenkelabschnitt 17,18 ausgerichtet ist.

Für den Zusammenbau der Hilfslangträger 12,13 werden die Hilfslangträgerteilstücke 12a,12b bzw. 13a,13b dementsprechend mit ihren einander zugeordneten Enden so auf Stoß gefügt, dass bei dem einen Hilfslangträgerteilstück 12a,13a der längere Schenkelabschnitt 18 oben liegt, wogegen das jeweils andere Hilfslangträgerteilstück 12b,13b so ausgerichtet wird, dass der kürzere Schenkelabschnitt 17 oben liegt. Gleichzeitig werden die Hilfslangträger 12,13 so ausgerichtet, dass ihre Schenkelabschnitte 17,18 zueinander zeigen, ihre Basisabschnitte 16 also jeweils der Außenseite des Hilfslangträgers 11 zugewandt sind.

Die Fügezone F1,F2 zwischen den Hilfslangträgerteilstücken 12a,12b und 13a,13b wird dann an den den Hilfsquerträger 14,15 zugeordneten Innenseiten ihrer Basisabschnitte 16 mit jeweils einer Verbindungslasche 24 überbrückt, die beispielsweise durch konventionelle, durch die Öffnungen 19 geführte Schraub- oder Rändelbolzverbindungen 26 kraft- und formschlüssig miteinander verbunden.

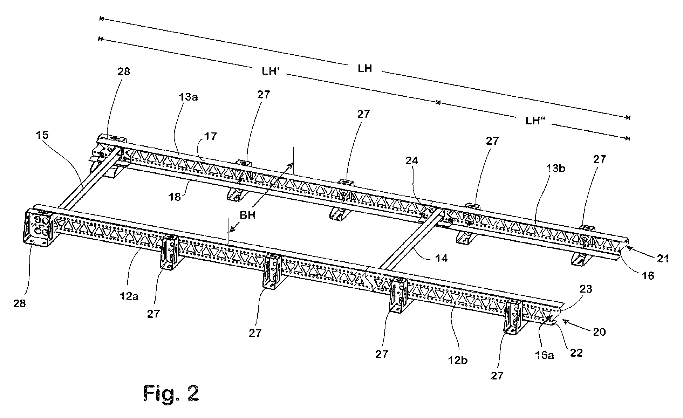

Beim hier beschriebenen Ausführungsbeispiel erstreckt sich zwischen den einander zugeordneten und gegenüberliegend zueinander in den Fügezonen F1,F2 angeordneten Verbindungslaschen 24 der eine Hilfsquerträger 14. Es ist jedoch selbstverständlich möglich, die Hilfsquerträger 14,15 unabhängig von der Verbindung der Hilfslangträgerteilstücke 12a-13b unter Nutzung der dazu vorgesehenen Durchgangsöffnungen 19 an den Hilfslangträgern 12,13 zu befestigen, wie dies in Fig. 1 und 2 für den der Führerkabine 5 zugeordneten Hilfsquerträger 15 gezeigt ist.

Die Abstützung des Hilfsrahmens 11 auf dem Chassis 2 erfolgt über aus Blechzuschnitten geformte Konsolen 27,28.

Die jeweils schuhartig geformten Konsolen 27,28 weisen einen Befestigungsabschnitt 29 und einen dazu rechtwinklig ausgerichteten Stützabschnitt 30 auf. Der Befestigungsabschnitt 29 besitzt an seiner dem Stützabschnitt 30 zugeordneten Seite eine Anlagefläche 31 für die Außenfläche 16a des Basisabschnitts 16 des jeweils zugeordneten Hilfslangträgers 12,13, wogegen der Stützabschnitt 30 an seiner vom Befestigungsabschnitt 29 abgewandten Unterseite eine Stützfläche 32 aufweist, die rechtwinklig in Bezug auf die Anlagefläche 31 ausgerichtet ist und zum Aufsetzen auf die Oberseite 33 der Langträger 8,9 des Chassis 2 vorgesehen ist. In die Anlageflächen 31 der Konsolen 27,28 sind übereinander mit Abstand zueinander angeordnete schlitzförmige und parallel zur Stützfläche 32 sich erstreckende Durchgangsöffnungen 34,35 in die betreffende Wand des Befestigungsabschnitts eingeformt. Der Abstand der Durchgangsöffnungen 34,35 entspricht dabei dem Abstand der Reihen von Durchgangsöffnungen 19 in den Basisabschnitten 16 der Hilfslangträgerteilstücke 12a-13b. Die Konsolen 27 besitzen jeweils ein Paar von in dieser Weise angeordneten Durchgangsöffnungen 34,35, wogegen bei den Konsolen 28, die etwa doppelt so breit sind wie die Konsolen 27 jeweils zwei paare von Durchgangsöffnungen 34,35 in die Anlagefläche 31 des Befestigungsabschnitts 29 eingeformt sind.

In den frei über die Anlagefläche 31 hinausstehenden Bereich der Stützfläche 32 des Stützabschnitts 30 ist ebenfalls jeweils mindestens eine in Längsrichtung des Stützabschnitts 30 beabstandete Durchgangsöffnung 36,37 in die jeweilige Wand des Stützabschnitts 30 eingeformt. Der Stützabschnitt 30 der Konsolen 27 weist dabei zwei entsprechend angeordnete Durchgangsöffnungen 36,37 auf, wogegen beim Stützabschnitt 30 der Konsolen 28 nur eine Durchgangsöffnung 36 vorgesehen ist.

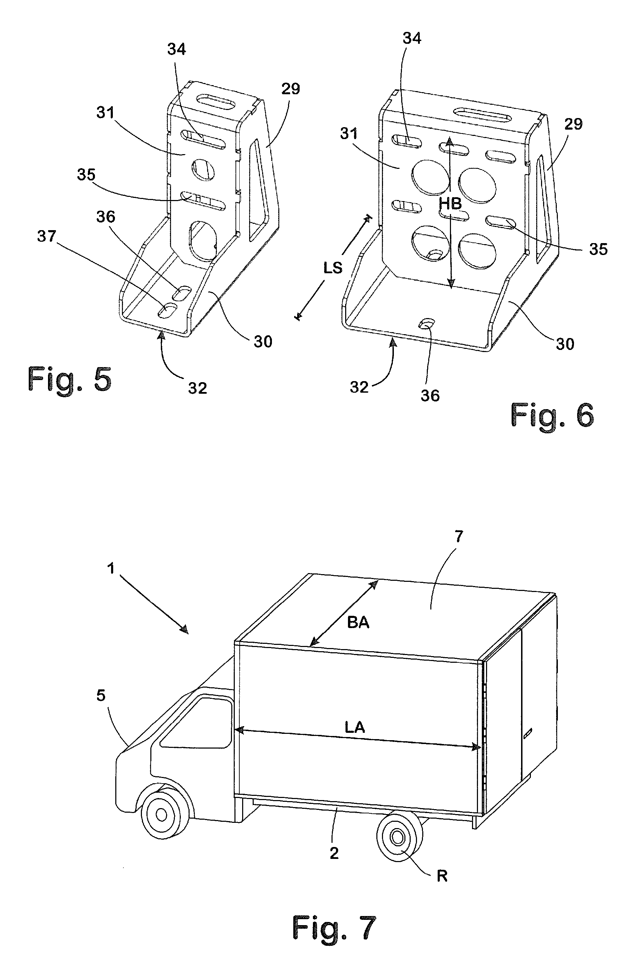

Die Länge LS des Stützabschnitts 30 und die Lage seiner Durchgangsöffnungen 36,37 sowie die Höhe HB des Befestigungsabschnitts 29 und die Lage seiner Durchgangsöffnungen 34,35 sind dabei so gewählt, dass die Stützabschnitte 30 der Konsolen 27,28 sicher auf der Oberseite 33 der Langträger 8,9 sitzen und andererseits der Hilfsrahmen 11 mit der Außenseite 16a seiner jeweiligen Hilfslangträger 12,13 an der Anlagefläche 31 des Befestigungsabschnitts 29 anliegen. Die Konsolen 27,28 überbrücken auf diese Weise die Breitendifferenz, die zwischen der im Bereich von dessen Längsträgern 8,9 vorhandenen Breite BC des Chassis 2 und der Breite BH des Hilfsrahmens 11 vorhanden ist, und halten den Hilfslangträger 12,13 gleichzeitig so hoch über den Langträgern 8,9, dass seine Oberkante in einer vorgeschriebenen Sollhöhe HSoll über dem ebenen Untergrund U, auf dem das Nutzfahrzeug 1 steht, gehalten ist und bei fertigem Nutzfahrzeug (Fig. 7) der auf dem Hilfslangträger 12,13 montierte Aufbau 7 dementsprechend frei über den Antriebsrädern R des Nutzfahrzeugs 1 steht.

Die Konsolen 27,28 sind jeweils aus unterschiedlichen Gruppen von Konsolen ausgewählt worden, die, wie die Hilfslangträgerteilstücke 12a-13b, im Betrieb, der die Montage des Aufbaus 7 auf dem Nutzfahrzeug 1 vornimmt, oder beim Hersteller des Aufbaus 7 bevorratet werden. Die jeweils zu einer der Gruppen zusammengefassten Konsolen unterscheiden sich dabei von den Konsolen der jeweils anderen Gruppen durch die Länge LS ihrer Stützabschnitte 30 und/oder die Höhe HB ihrer Befestigungsabschnitte 29. Ein anderes Unterscheidungskriterium kann die für die Abstützung effektiv nutzbare Länge LS der Stützabschnitte 30 wesentliche Position der Durchgangsöffnungen 36,37 oder die zum Befestigen des jeweils zugeordneten Hilfslangträgers 12,13 effektiv nutzbare Höhe bestimmende Position der schlitzförmigen Durchgangsöffnungen 34,35 in der Anlagefläche 31 sein. So werden beispielsweise zehn Gruppen von unterschiedlich dimensionierten, im Übrigen aber identisch geformten Konsolen bereitgehalten.

Die Abmessungen der Konsolen der einzelnen Gruppen sind so abgestimmt, dass durch Auswahl von Konsolen aus einer bestimmten Gruppe die beim jeweiligen Nutzfahrzeug 1, auf dem der Aufbau 7 montiert werden soll, bestehende Höhendifferenz zwischen der Isthöhe Hist der Oberkante des Chassis 2 in dessen für die Befestigung der Konsolen vorgesehenen Bereichen (hier die Oberseite 33 der Langträger 8,9) und einer für die Position des Hilfsrahmens 11 vorgesehenen Sollhöhe Hsoll, überbrückt werden kann. Gleichzeitig sind die Abmessungen der bereitstehenden Konsolen so bestimmt, dass die Breitendifferenz, die zwischen der Breite BH des Hilfsrahmens 11 und der Breite BC im Bereich der Langträger 8,9 des Chassis 2 besteht, über die Stützabschnitte 30 der jeweils ausgewählten Konsolen überbrückt werden kann. Die zu den Gruppen zusammengefassten Konsolen sind dabei so bemessen, dass zu jedem gängigen Fahrzeugtyp und zu jedem zugeordneten Hilfsrahmen 11 oder Aufbau 7 mindestens eine Gruppe von passenden Konsolen zur Verfügung steht.

Zur Montage des Aufbaus 7 auf dem Nutzfahrzeug 1 werden also die Konsolen 27,28 in der voranstehend beschriebenen Weise aus den bereitstehenden Gruppen von Konsolen ausgewählt.

Anschließend werden die Konsolen 27,28 mit ihren Befestigungsabschnitten 29 auf der Oberseite 33 der zugeordneten Langträger 8,9 an dort eingebrachten Durchgangsöffnungen mittels geeigneter Schrauben- oder Rändelbolzverbindungen befestigt. Dabei wird jeweils einer der breiteren Konsolen 28 am der Fahrerkabine 5 zugeordneten Bereich angeordnet, um die dort auftretenden höheren Lasten sicher aufnehmen zu können. Beispielsweise vier der schmaleren Konsolen 27 werden pro Langträger 8,9 in gleichmäßigen Abständen über die zur Verfügung stehende Länge verteilt angeordnet.

Daraufhin wird der Hilfsrahmen 11 zwischen die Befestigungsabschnitte 30 der Konsolen 27,28 gesetzt und ebenfalls durch Schraub- oder Rändelbolzverbindungen mit den Konsolen 27,28 verbunden. Umfasst der Hilfsrahmen 11 keine Hilfsquerträger 14,15, besteht der Hilfsrahmen 11 also nur aus den Hilfslangträgern 12,13, so werden die Hilfslangträger 12,13 in zwei nacheinander absolvierten Arbeitsschritten an die Befestigungsabschnitte 29 der jeweils zugeordneten Konsolen 27,28 gesetzt und dort befestigt.

Unabhängig, ob sie als Teil des hier in den Figuren gezeigten Hilfsrahmens 11 über die Hilfsquerträger 14,15 miteinander verbunden sind oder ob sie, bei Verzicht auf die Hilfsquerträger 14,15 unabhängig voneinander an die Befestigungsabschitte 29 der Konsolen 27,28 angesetzt werden, erfolgt die Verbindung der jeweiligen Hilfslangträger 12,13 über die zur Deckung gebrachten Öffnungen 19 und 34,35, wobei durch die Schlitzform der Durchgangsöffnungen 34,35 ein Toleranzausgleich ermöglicht ist.

Die Höhe der Durchgangsöffnungen 34,35 über dem Stützabschnitt 30 der Konsolen 27,28 ist dabei unter Berücksichtigung der Höhe des Basisabschnitts 16 der Hilfslangträgerteilstücke 12,13 so bemessen, dass der Hilfsrahmen 11 mit Abstand zur Oberkante der Stützabschnitte 30 an den Konsolen 27,28 gehalten ist. Auf diese Weise wird verhindert, dass Höhentoleranzen die Montage des Hilfsrahmens 11 an den Konsolen 27,28 behindern.

Nachdem der Hilfsrahmen 11 montiert ist, wird auf ihm der Aufbau 7 in der aus dem Stand der Technik bekannten Weise errichtet.

### BEZUGSZEICHEN

- 1: Nutzfahrzeug
- 2: Chassis
- 3: Antriebsachse
- 4: gelenkte Achse
- 5: Führerkabine
- 6: Freiraum
- 7: kofferartiger Aufbau
- 8,9: Langträger des Chassis 2
- 10: Querträger des Chassis 2
- 11: Hilfsrahmen
- 12,13: Hilfslangträger
- 14,15: Hilfsquerträger
- 12a,12b: Hilfslangträgerteilstücke
- 13a,13b: Hilfslangträgerteilstücke
- 16: jeweiliger Basisabschnitt der Hilfslangträgerteilstücke 12a-13b
- 16a: Außenfläche des Basisabschnitts 16 der Hilfslangträger 12,13
- 17,18: jeweilige Schenkelabschnitte der Hilfslangträgerteilstücke 12a-13b
- 19: Durchgangsöffnungen
- 20,21: Anschrägungen
- 22,23: Absätze
- 24: Verbindungslasche
- 26: Rändelbolzverbindungen
- 27,28: Konsolen
- 29: Befestigungsabschnitt
- 30: Stützabschnitt
- 31: Anlagefläche
- 32: Stützfläche zur Anlage an die Oberseite 33 der Langträger 8,9
- 33: jeweilige Oberseite der Langträger 8,9
- 34,35: schlitzförmig Durchgangsöffnungen
- 36,37: Durchgangsöffnungen im Stützabschnitt 30
- BH: Breite des Hilfsrahmens 11
- BC: Breite des Chassis 2 im Bereich der Langträger 8,9
- BA: Breite des Aufbaus 7
- F1,F2: Fügezonen
- HB: Höhe des Befestigungsabschnitts 29
- Hsoll: Sollhöhe der Oberkante des Hilfsrahmens 11
- Hist: Isthöhe der Oberkante des Chassis 2
- L: Längsrichtung des Nutzfahrzeugs 1
- LH: Gesamtlänge des jeweiligen Hilfslangträgers 12,13
- LC: für die Montage des Aufbaus 7 zur Verfügung stehende Länge
- LA: Länge des Aufbaus 7
- LH': Länge der Hilfslangträgerteilstücke 12a,13a
- LH": Länge der Hilfslangträgerteilstücke 12b,13b
- LS: Länge des Stützabschnitts 30
- R: Antriebsräder
- U: ebener Untergrund

## Patentansprüche

1. Nutzfahrzeug mit einem Chassis (2), an dem mindestens eine Achse (3) mit Rädern (R) des Nutzfahrzeugs (1) gelagert ist, und mit einem Aufbau (7), der auf dem Chassis (2) errichtet ist, **dadurch**
**gekennzeichnet, dass** der Aufbau (7) von einem Hilfsrahmen (11) getragen ist, der auf dem Chassis (2) über einzelne Konsolen (27,28) abgestützt ist, die den Hilfsrahmen (11) bezogen auf einen ebenen Untergrund (U), auf dem das Nutzfahrzeug (1) steht, in einer Sollhöhe (Hsoll) halten, die höher ist als die auf den ebenen Untergrund (U) bezogene Höhe (Hist) der Oberkante des Chassis (2) in dem Bereich (6), in dem der Aufbau (7) montiert ist.

2. Nutzfahrzeug nach Anspruch **1,dadurch gekennzeichnet,**
**dass** das Chassis (2) zwei Langträger (8,9) umfasst, auf denen die den Hilfsrahmen (11) stützenden Konsolen (27,28) stehen.

3. Nutzfahrzeug nach einem der voranstehenden Ansprüche, **dadurch gekennzeichnet, dass** derHilfsrahmen(11)zweiin Längsrichtung (L) des Nutzfahrzeugs (1) ausgerichtete Hilfslangträger (12,13) umfasst, die aus mindestens zwei Hilfslängsträgerteilstücken (12a,12b,13a,13b) zusammengesetzt sind.

4. Nutzfahrzeug nach Anspruch 3, **dadurch gekennzeichnet,**
**dass** die Hilfslangträgerteilstücke (12a,12b,13a,13b) mittels Verbindungslaschen (24) miteinander verbunden sind.

5. Nutzfahrzeug nach Anspruch 4, **dadurch gekennzeichnet,**
**dass** die Verbindungslaschen (24) ausschließlich form- oder kraftschlüssig mit den Hilfslangträgerteilstücken (12a-13b) verbunden sind.

6. Nutzfahrzeug nach einem der Ansprüche 3 - 5, **dadurch**
**gekennzeichnet, dass** die Hilfslangträgerteilstücke (12a-13b) an ihren Enden jeweils eine in Höhen- und Längsrichtung des Hilfslangträgerteilstücks (12a-13b) angeschrägte Anschrägung (20,21) aufweisen.

7. Nutzfahrzeug nach Anspruch 6, **dadurch gekennzeichnet,**
**dass** die an beiden Enden der Längsträger jeweils vorgesehenen Anschrägungen (20,21) bezogen auf die Mitte des Hilfslangträgerteilstücks (12a-13b) spiegelsymmetrisch geformt sind.

8. Nutzfahrzeug nach einem der voranstehenden Ansprüche, **dadurch**
**gekennzeichnet, dass** die Konsolen (27,28) schuhförmig mit einem Befestigungsabschnitt (29) und einem rechtwinklig zum Befestigungsabschnitt (29) angeordneten Stützabschnitt (30) ausgebildet sind, **dass** der Hilfsrahmen (11) an einer dem Stützabschnitt (30) zugewandten Anlagefläche (31) des Befestigungsabschnitts (29) anliegt und **dass** der Stützabschnitt (30) mit einer vom Befestigungsabschnitt (29) abgewandten Stützfläche (32) am zugeordneten Bauteil (8,9) des Chassis (2) abgestützt ist.

9. Nutzfahrzeug nach Anspruch 8, **dadurch gekennzeichnet,**
**dass** die Konsolen (27,28) ausschließlich form- oder kraftschlüssig mit dem jeweils zugeordneten Hilfslangträger (12,13) und dem Chassis (2) verbunden sind.

10. Nutzfahrzeug nach einem der voranstehenden Ansprüche, **dadurch gekennzeichnet, dass** die Konsolen (27,28) an ihrem Befestigungsabschnitt (29) oder ihrem Stützabschnitt (30) jeweils zwei oder mehr in Längsrichtung des jeweiligen Abschnitts (29,30) angeordnete Öffnungen (34,35,36,37) zum Durchführen eines Befestigungsmittels aufweisen, **dass** die Hilfslangträger (12,13) und das zugeordnete Bauteil (8,9) des Chassis (2) ebenfalls zwei oder mehr Öffnungen (19) zum Durchführen des Befestigungsmittels aufweisen, **dass** bei jeder Konsole (27,28) mindestens eine Öffnung (34,35) des Befestigungsabschnitts (30) mit einer Öffnung (19) des zugeordneten Hilfslangträgers (12,13) und eine Öffnung (36,37) des Stützabschnitts (30) mit einer Öffnung des zugeordneten Bauteils (8,9) des Chassis (2) zur Deckung gebracht sind und **dass** jeweils ein Befestigungsmittel durch die zur Deckung gebrachten Öffnungen (34,35,36,37,19) geführt ist.

11. Nutzfahrzeug nach einem der voranstehenden Ansprüche, **dadurch gekennzeichnet, dass** die Konsolen (27,28) und die Hilfslangträger (12,13) Blechformteile sind.

12. Verfahren zum Montieren eines Aufbaus (7) auf einem Chassis (2) eines Nutzfahrzeugs (1), wobei an dem Chassis (2) mindestens eine Achse (3) mit Rädern (R) des Nutzfahrzeugs (1) gelagert ist, umfassend folgende Arbeitsschritte:
a) Bereitstellen des mit dem Chassis (2) ausgestatteten Nutzfahrzeugs (1);
b) Bereitstellen einer Auswahl von Gruppen von Konsolen, die jeweils einen Befestigungsabschnitt (29) und einen rechtwinklig dazu angeordneten Stützabschnitt (30) aufweisen, wobei sich die Gruppen von Konsolen durch eine unterschiedliche Höhe (HB) der Befestigungsabschnitte (29) oder Länge (LS) der Stützabschnitte (30) der den Gruppen von Konsolen zugeordneten Konsolen unterscheiden;
c) Bereitstellen eines Hilfsrahmens (11),
d) Bestimmen der Höhendifferenz zwischen der Isthöhe (Hist) der Oberkante des Chassis (2) in dessen für die Befestigung der Konsolen (27,28) vorgesehenen Bereichen und einer für die Position des Hilfsrahmens (11) vorgesehenen Sollhöhe (Hsoll), wobei die Isthöhe (Hist) der für die Befestigung der Konsolen vorgesehenen Bereiche des Chassis (2) und die Sollhöhe (Hsoll) der Position des Hilfsrahmens (11) jeweils über einem ebenen Untergrund (U), auf dem das Nutzfahrzeug (1) steht, gemessen wird,
e) Auswählen mindestens einer Gruppe von Konsolen (27,28), bei denen die Höhe (HB) ihrer Befestigungsabschnitte der im Arbeitsschritt d) ermittelten Höhendifferenz entspricht;
f1) Aufsetzen der Stützabschnitte (30) der Konsolen (27,28) der ausgewählten Gruppe von Konsolen (27,28) auf den jeweils zugeordneten Bereichen des Chassis (2), Befestigen der Konsolen (27,28) am Chassis (2) und Montieren des Hilfsrahmens (11) an den Befestigungsabschnitten (30) der am Chassis (2) befestigten Konsolen (27,28);
oder
f2) Montieren der Konsolen (27,28) der ausgewählten Gruppe von Konsolen (27,28) mit ihren Befestigungsabschnitten (30) am Hilfsrahmen (11), Aufsetzen der Stützabschnitte (30) der am Hilfsrahmen (11) befestigten Konsolen (27,28) auf den jeweils zugeordneten Bereichen des Chassis (2) und Befestigen der Konsolen (27,28) am Chassis (2);
g) Montieren des Aufbaus (7) auf dem Hilfsrahmen (11).

13. Verfahren nach Anspruch **12, dadurch gekennzeichnet, dass** im Arbeitsschritt d) zusätzlich die Breitendifferenz zwischen einer parallel zum ebenen Untergrund (U) gemessenen Istbreite (BC) des Chassis (2) an den für die Befestigung der Konsolen (27,28) vorgesehenen Bereichen (8,9) und einer Sollbreite (BH) des Hilfsrahmens (11) bestimmt wird und **dass** im Arbeitsschritt e) mindestens eine Gruppe von Konsolen (27,28) so bestimmt wird, dass nicht nur die Höhe (HB) der Befestigungsabschnitte (29) der im Arbeitsschritt d) ermittelten Höhendifferenz, sondern auch die Länge (LS) der Stützabschnitte (30) der der jeweiligen Gruppe zugeordneten Konsolen (27,28) der zusätzlich ermittelten Breitendifferenz entspricht.

14. Verfahren nach Anspruch 12 oder 13, **dadurch**
**gekennzeichnet, dass** derHilfsrahmen(11)alsBausatz bereitgestellt wird, der mindestens zwei Gruppen von Hilfslangträgerteilstücken (12a,13a;12b,13b) umfasst, wobei sich die Gruppen von Hilfslangträgerteilstücken (12a,13a;12b,13b) durch die Länge (LH',LH") der ihnen zugeordneten Hilfslangträgerteilstücke (12a,13a;12b,13b) unterscheiden, die Hilfslangträgerteilstücke (12a,13a;12b,13b) der Gruppen im Übrigen jedoch identisch geformt sind, **dass** das aus den Gruppen von Hilfslangträgerteilstücken (12a,13a;12b,13b) unter Berücksichtigung einer Solllänge (LH) des Hilfsrahmens (11) jeweils Hilfslangträgerteilstücke (12a,13a;12b,13b) unterschiedlicher Länge (LH',LH") derart ausgewählt werden, dass die Gesamtlänge (LH) von mindestens zwei aus den ausgewählten Hilfslangträgerteilstücken (12a,12b;13a,13b) zusammengesetzten Hilfslangträgern (12,13) jeweils der Solllänge (LH) des Hilfsrahmens (11) entspricht, und **dass** unter Verwendung der aus den Hilfslangträgerteilstücken (12a,13a;12b,13b) gebildeten Hilfslangträgern (12,13) der Hilfsrahmen (11) montiert wird.

15. Verfahren nach einem der Ansprüche 12 - 14, **dadurch**
g**ekennzeichnet**, **dass** die Konsolen (27,28) mit dem Chassis (2), die Konsolen (27,28) mit dem Hilfsrahmen (11), der Hilfsrahmen (11) mit dem Aufbau (7) und die Bauteile (12,13,14,15,24) des Hilfsrahmens (11) untereinander jeweils ausschließlich form- oder kraftschlüssig miteinander verbunden werden.
